(19) Europäisches Patentamt
European Patent Office
Office européen des brevets

(11) Veröffentlichungsnummer: **0 238 051**
**A1**

(12) # EUROPÄISCHE PATENTANMELDUNG

(21) Anmeldenummer: **87103896.4**

(22) Anmeldetag: **17.03.87**

(51) Int. Cl.4: **B27K 3/52**, B27K 3/50

(30) Priorität: **20.03.86 DE 3609317**

(43) Veröffentlichungstag der Anmeldung:
**23.09.87 Patentblatt 87/39**

(84) Benannte Vertragsstaaten:
**AT BE CH DE ES FR GB GR IT LI NL SE**

(71) Anmelder: **Dr. Wolman GmbH**
**Dr.-Wolman-Strasse 31-33**
**D-7573 Sinzheim(DE)**

(72) Erfinder: **Goettsche, Reimer, Dr.**
**Waldstrasse 27**
**D-7570 Baden-Baden 19(DE)**
Erfinder: **Marx, Hans-Norbert**
**Mozartweg 8**
**D-7580 Buehl-Weitenung(DE)**
Erfinder: **Hettler, Wendelin**
**Panoramastrasse 9**
**D-7573 Sinzheim-Muellhofen(DE)**

(74) Vertreter: **Schweiss, Werner, Dr. et al**
**BASF Aktiengesellschaft Patentabteilung**
**Carl-Bosch-Strasse 38**
**D-6700 Ludwigshafen(DE)**

(54) **Holzschutzmittel.**

(57) Holzschutzmittel, die Kupfer, ein Alkanolamin und eine Säure enthalten, deren Kupfersalz wasserunlöslich ist, und Verfahren zur Imprägnierung von Holz.

EP 0 238 051 A1

# Holzschutzmittel

Die vorliegende Erfindung betrifft ein Holzschutzmittel, das eine wäßrige Lösung eines Kupferkomplexes mit einem Alkanolamin und eine monomere organische Verbindung (Säure) enthält, deren Kupfersalz wasserunlöslich ist. Holzschutzmittel auf Basis anorganischer Kupferbindungen mit Alkanolamin als Komplexbildner sind bekannt (EP-89 958). Sie haben den Nachteil, daß einerseits nach der Fixierung des Kupfers im Holz eine Kupferauswaschung mit Wasser von ca. 10 % auftreten kann und andererseits die Wirksamkeit des Mittels gegenüber holzzerstörenden Basidiomyceten trotz des hohen Kupfergehaltes im Vergleich zu kupfer-und chromathaltigen Salzen (CK-, CKB-Typen) geringer ist. Die Kupferfixierung der bekannten Holzschutzmittel mit einem pH-Wert der Lösungen über 8 erfolgt im Holz ab pH ca. 7,5-8,0. Es bilden sich hierbei basische Kupferverbindungen, z.B. Kupferhydroxid. Diese Kupferverbindungen sind bis zu einem pH-Wert von ca. 5,0 stabil, können dann aber durch verdünnte Säuren, wie sie in sauren Böden oder saurem Regen vorliegen, wieder gelöst werden, so daß sich unter diesen Bedingungen eine erhöhte Auswaschung aus dem Holz ergibt.

Es wurde jetzt gefunden, daß obengenannte Nachteile entfallen, wenn wasserlösliche Holzschutzmittel auf Basis einer Mischung von mit Alkanolamin komplexierten Kupferverbindungen und einer mit Kupfer wasserunlösliche Salze bildenden monomeren organischen Verbindung (Säure) oder deren Salz verwendet werden. Ein Alkanolamin ist beispielsweise ein Mono-$C_1$-$C_4$-Alkanolamin, z.B. Ethanolamin. Eine Verbindung, insbesondere eine Säure, die ein wasserunlösliches Kupfersalz bildet, ist beispielsweise Sorbinsäure, Benzoesäure, substituierte Benzoesäure, Dehydracetsäure, 5-Nitroisophthalsäure, Oxalsäure, Salicylanilid, Amphotenside oder deren Mischung. Eine substituierte Benzoesäure ist z.B. eine einfach oder zweifach, beispielsweise durch Halogen (Cl, Br, J), $NO_2$, OH oder $C_1$-$C_4$-Alkyl (z.B. Methyl), vorzugsweise in ortho-Stellung, substituierte Benzoesäure. Amphotenside sind beispielsweise fungizide Amphotenside, z.B. eine $C_8$-$C_{20}$-Alkylaminocarbonsäure, beispielsweise C10-$C_{14}$-Alkylamino-$C_2$-$C_5$-Carbonsäure, ein Alkylaminoalkylglycin, z.B. $C_8$-$C_{20}$-Alkylaminoalkylglycin, beispielsweise $C_{10}$-$C_{14}$-Alkylamino-$C_2$-$C_3$-alkyl-glycin oder $C_{10}$-$C_{14}$-Alkylamino-$C_2$-$C_3$-alkylamino-$C_2$-$C_3$-alkyl-glycin. Die Säure kann auch in Form ihres wasserlöslichen Salzes, z.B. Alkalisalz, Alkanolaminsalz, vorliegen.

Die verdünnten wäßrigen Lösungen (Imprägnierlösungen) dieser Mittel haben einen pH-Wert von 8 bis 11, vorzugsweise 9-10. Die wasserunlöslichen Kupfersalze der obengenannten Säuren sind auch bei pH-Werten unter 5 beständig. Sie sind gut wirksam gegen Basidiomyceten-Pilze und sie verringern die Auswaschung des Kupfers.

Als Komplexbildner eignet sich aus wirtschaftlichen Gründen insbesondere Monoethanolamin; die Herstellung der neuen Holzschutzmittel ist auch mit anderen Alkanolaminen, z.B. Isopropanolamin, 1,1-, 1,2-Di-aminoethanol, Aminoethylethanolamin, Diethanolamin, Dimethylethanolamin möglich. Hierbei wird die Menge der zugesetzten Alkanolamine vorteilhaft so bemessen, daß sie zur Komplexbildung des Kupfers ausreicht (1 g-Atom Kupfer benötigt i.a. 4 mol Äquivalente Amin) und sich darüber hinaus gegebenenfalls Alkanolamin-Salze der organischen Säuren bilden, so daß sich in der wäßrigen Imprägnierlösung ein pH-Wert von 8 oder mehr, vorzugsweise 9 bis 10 einstellt.

Der pH-Wert der Holzschutzmittel und der verdünnten wäßrigen Imprägnierlösung kann gegebenenfalls unabhängig von der Komplexbildung auch durch Zusatz von Alkalien, Ammoniak oder anderen wasserlöslichen Aminen eingestellt werden.

Die neuen Holzschutzmittel können gegebenenfalls übliche zusätzliche Bestandteile wie Korrosionsinhibitoren, z.B. Isonansäure bzw. deren Salze enthalten.

Es empfiehlt sich, dem Holzschutzmittel Borsäure und/oder Borate zuzusetzen, um durch diese diffusionsfähigen Bestandteile auch eine Imprägnierung nicht zugänglicher Holzbereiche (Kernholz) zu erfassen.

Die neuen Holzschutzmittel können als mehr oder weniger viskose Flüssigkeit, als Paste oder in fester Form vorliegen.

Die wasserverdünnbaren Mittel enthalten -in konzentrierter Form -das Kupfer, berechnet als Element, i.a. in einer Menge von 1 bis 15 Gewichtsprozent.

Geeignete Konzentrate enthalten beispielsweise (jeweils Gewichtsprozent)

2,5 bis 50 % Cu-Verbindung
10 bis 50 % Alkanolamin
10 bis 30 % organische Verbindung (Säure)
bis zu 30 % Verbindung mit einem fungizid wirkenden Anion (Borsäure),

wobei die Summe jeweils 100 (Gew.-%) ergibt, sowie gegebenenfalls untergeordnete Mengen an anderen Bestandteilen, wie Aminen, Ammoniak, Korrosionsinhibitoren und erforderlichenfalls Wasser, dessen Anteil jedoch i.a. gering gehalten werden kann und im wesentlichen der Handhabung dient. Die Erfindung erstreckt sich jedoch gleichermaßen auf die durch Verdünnung mit Wasser herstellbaren Imprägnierlösungen entsprechend geringer Einzelkonzentration.

Der Gehalt an der organischen Verbindung (Säure) beträgt beispielsweise 8 bis 35 %, z.B. 10 bis 30 %, insbesondere 10 bis 25 %. Die Verbindung kann auch in Form ihres Kupfersalzes vorliegen.

Die Erfindung wird anhand der folgenden Beispiele erläutert.

Es wurden Kiefernsplintholzklötzchen mit Imprägnierlösungen imprägniert, die aus den Holzschutzmitteln durch Verdünnen mit Wasser hergestellt worden waren. Nach der Imprägnierung wurden die Holzklötzchen mit Wasser ausgewaschen, die Menge des ausgewaschenen Kupfers bestimmt und die Grenzwerte der Konzentration der Imprägnierlösung festgestellt, bei denen die Holzklötzchen nach der Imprägnierung und nach der Auswaschung von Basidiomyceten-Pilzen nicht mehr angegriffen wurden.

<u>Vergleichsbeispiel</u> (nicht erfindungsgemäß) 20 % $Cu(OH)_2CuCO_3$
45 % Monoethanolamin
10 % Borsäure
25 % Wasser

Cu-Gehalt: 11,60 %. 40 g der Lösung wurden mit Wasser auf 1 Liter aufgefüllt (Anwendungskonzentration 4 %).
Cu-Auswaschung (4 % Anwendungskonzentration): 9,5 %

Grenzwerte gegenüber holzzerstörenden Basidiomyceten (Coniophora puteana, Poria monticola) mehr als 5 % Anwendungskonzentration.

<u>Beispiel</u> <u>1</u>:37,00 % Cu-Sorbat
30,00 % Monoethanolamin
10,00 % Borsäure
23,00 % Wasser

Cu-Gehalt: 8,20 %
Cu-Auswaschung (4 % Anwendungskonzentration): 4,5 %

Grenzwert gegenüber holzzerstörenden Basidiomyceten (Coniophora puteana, Poria monticola) kleiner als 4 % Anwendungskonzentration

<u>Beispiel</u> <u>2:</u> 20,00 % Kupfersorbat
10,00 % $Cu(OH)_2CuCO_3$
40,00 % Monoethanolamin
12,50 % Oxalsäure ($C_2H_2O_4 \bullet 2H_2O$)
17,50 % Wasser

Cu-Gehalt: 10,20 %
Cu-Auswaschung (4 % Anwendungskonzentration): 3,9 %

Grenzwert gegenüber holzzerstörenden Basidiomyceten (Coniophora puteana, Poria monticola) kleiner als 4 % Anwendungskonzentration

Beispiel 3:45,00 % Kupfer-2-Methylbenzoat
40,00 % Monoethanolamin
15,00 % Wasser

Cu-Gehalt: 8,6 %
Cu-Auswaschung (4 % Anwendungskonzentration): 4,5 %

Grenzwert gegenüber holzzerstörenden Basidiomyceten (Coniophora puteana, Poria monticola) kleiner als 4 % Anwendungskonzentration

Beispiel 4:15,00 % $Cu(OH)_2CuCO_3$
28,00 % 5-Nitroisophthalsäure
42,00 % Monoethanolamin
15,00 % Wasser

Cu-Gehalt: 8,7 %
Cu-Auswaschung (4 % Anwendungskonzentration): 5 %

Grenzwert gegenüber holzzerstörenden Basidiomyceten (Coniophora puteana, Poria monticola) kleiner als 4 % Anwendungskonzentration

Beispiel 5:30,00 % Kupfersalz der Dehydracetsäure
30,00 % Monoethanolamin
15,00 % Borsäure
25,00 % Wasser

Cu-Gehalt: 4,8 %
Cu-Auswaschung (5 % Anwendungskonzentration): 4,7 %

Grenzwert gegenüber holzzerstörenden Basidiomyceten (Coniophora puteana, Poria monticola) kleiner als 5 % Anwendungskonzentration

Beispiel 6:35,00 % Cu-2,5-Dichlorbenzoat
30,00 % Monoethanolamin
10,00 % $H_3BO_3$
25,00 % Wasser

Cu-Gehalt: 5,0 %
Cu-Auswaschung (5 % Anwendungskonzentration): 4,0 %

Grenzwert gegenüber holzzerstörenden Basidiomyceten (Coniophora puteana, Poria monticola) kleiner als 5 % Anwendungskonzentration

Beispiel 7:35,00 % Kupfersalz des Salizylanilids
30,00 % Monoethanolamin
10,00 % $H_3BO_3$
25,00 % Wasser

Cu-Gehalt: 4,7 %
Cu-Auswaschung (5 % Anwendungskonzentration): 4,9 %

Grenzwert gegenüber holzzerstörenden Basidiomyceten (Coniophora puteana, Poria monticola) kleiner als 5 % Anwendungskonzentration

<u>Beispiel</u> <u>8</u>:40,00 % Kupferbenzoat
35,00 % Monoethanolamin
10,00 % $H_3BO_3$
15,00 % Wasser

Cu-Gehalt: 8,4 %
Cu-Auswaschung (5 % Anwendungskonzentration): 4,8 %

Grenzwert gegenüber holzzerstörenden Basidiomyceten (Coniophora puteana, Poria monticola) kleiner als 4 % Anwendungskonzentration

<u>Beispiel</u> <u>9</u>:15,00 % $Cu(OH)_2CuCO_3$
30,00 % Monoethanolamin
15,00 % Oxalsäure
12,50 % Mischung von Alkylaminoalkylglycinen *)
28,00 % Wasser

Cu-Gehalt: 8,7 %
Cu-Auswaschung (5 % Anwendungskonzentration): 2,9 %

Grenzwert gegenüber holzzerstörenden Basidiomyceten (Coniophora puteana, Poria monticola) kleiner als 4 % Anwendungskonzentration

*) 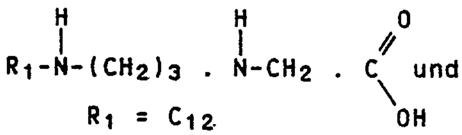 und 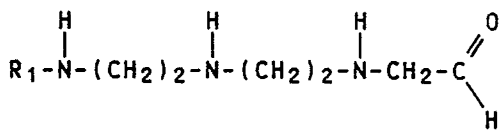

$R_1 = C_{12}$

<u>Beispiel</u> <u>10</u>:10,00 % $Cu(OH)_2CuCO_3$
20,00 % Monoethanolamin
10,00 % Oxalsäure
10,00 % 1-Dodecyl-1,4,7-triazol-octan-8-carbonsäurehydrochlorid
50,00 % Wasser

Cu-Gehalt: 5,8 %
Cu-Auswaschung (5 % Anwendungskonzentration): 3,2 %

Grenzwert gegenüber holzzerstörenden Basidiomyceten (Coniophora puteana, Poria monticola) kleiner als 5 % Anwendungskonzentration

Beispiel 11: 15,00 % $Cu(OH)_2CuCO_3$ 15,00 % Oxalsäure
12,50 % Dodecylaminobuttersäure
5,00 % $H_3BO_3$
23,00 % Wasser

Cu-Gehalt: 8,7 %
Cu-Auswaschung (5 % Anwendungskonzentration): 2,5 %

Grenzwert gegenüber holzzerstörenden Basidiomyceten (Coniophora puteana, Poria monticola) kleiner als 5 % Anwendungskonzentration

Die genannten Säuren können auch in Mischungen untereinander verwendet werden. So ist es empfehlenswert, biozide Amphotenside und fungizide oder insektizide Säuren in Mischungen einzusetzen.

Die Fixierung des Kupfers der erfindungsgemäßen Mittel im Holz ist unter Normalbedingungen in 2 bis 4 Wochen abgeschlossen, je nach Temperatur. Durch Zuführung von Energie, insbesondere Heißdampf, läßt sich die Fixierung beschleunigen.

Es wurden Kiefernholzklötzchen mit einer Anwendungskonzentration von 4 % des Mittels gemäß Beispiel 1 imprägniert und 2 Stunden später mit Heißdampf von 100°C behandelt, bis die Klötzchen eine Temperatur von mindestens 90°C erreichten (2 Stunden). Die Klötzchen wurden danach mit Wasser ausgewaschen und die ausgewaschene Cu-Menge im Verhältnis zum Cu-Gehalt des Klötzchens bestimmt. Die Gesamt-Cu-Auswaschung betrug 2,5 %.

**Ansprüche**

1. Holzschutzmittel auf der Basis einer Kupferverbindung in Form eines Komplexes mit einem Alkanolamin, dadurch gekennzeichnet, daß das Mittel zusätzlich eine monomere organische Verbindung enthält, deren Salz mit Kupfer wasserunlöslich ist.

2. Mittel nach Anspruch 1, dadurch gekennzeichnet, daß die organische Verbindung Oxalsäure ist.

3. Mittel nach Anspruch 1, dadurch gekennzeichnet, daß eine fungizide und/oder insektizide organische Säure verwendet wird.

4. Mittel nach Anspruch 3, dadurch gekennzeichnet, daß die fungizide organische Säure Sorbinsäure ist.

5. Mittel nach Anspruch 1, dadurch gekennzeichnet, daß die Verbindung ein biozides Amphotensid ist.

6. Mittel nach Anspruch 1, dadurch gekennzeichnet, daß das Amphotensid eine $C_8$-$C_{20}$-Alkylaminocarbonsäure ist.

7. Mittel nach dem vorhergehenden Anspruch, dadurch gekennzeichnet, daß das Amphotensid eine $C_8$-$C_{20}$-Alkyl-1,4,7-triazol-$C_6$-$C_{10}$-alkyl-carbonsäure ist.

8. Verfahren zum Schutz von Holz, dadurch gekennzeichnet, daß man das Holz mit einer Imprägnierlösung behandelt, die durch Verdünnen mit Wasser aus einem Holzschutzmittel gemäß Anspruch 1 hergestellt worden ist.

9. Verfahren nach Anspruch 8, dadurch gekennzeichnet , daß man die Imprägnierung des Holzes durch äußere Energiezufuhr, insbesondere Heißdampf, beschleunigt.

Europäisches Patentamt

# EUROPÄISCHER RECHERCHENBERICHT

Nummer der Anmeldung

EP 87 10 3896

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 520 394 (DR. WOLMAN GmbH) * Ansprüche; Seite 3, Zeile 33 - Seite 5, Zeile 17; Beispiel 5 * | 1,8,9 | B 27 K 3/52<br>B 27 K 3/50 |
| A | | 2-7 | |
| X | US-A-3 930 834 (D.T. SCHULTEIS et al.) * Spalte 2, Zeile 51 - Spalte 3, Zeile 65; Ansprüche * | 1-7 | |
| X | AU-A- 519 146 (COMMONWEALTH SCIENTIFIC AND INDUSTRIAL RESEARCH ORGANISATION) * Seite 4, Zeile 7 - Seite 5, Zeile 23; Ansprüche * | 1,3,4,8,9 | |
| | | | RECHERCHIERTE SACHGEBIETE (Int. Cl.4) |
| A | WO-A-8 504 668 (OSMOSE WOOD PRESERVING CO. OF AMERICA INC.) * Seite 8, Zeile 20 - Seite 9, Zeile 1; Ansprüche * | 1-9 | B 27 K |
| A | EP-A-0 039 538 (B.P. CHEMICALS) * Seite 2, Zeilen 7-26; Ansprüche * | 1,2,8,9 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 15-06-1987 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

Nummer der Anmeldung

EP 87 10 3896

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 203 817 (KENOGARD AB) * Seite 2, Zeile 32 - Seite 5, Zeile 1; Ansprüche * & EP-A-89 958 (Kat. D,A) | 1-9 | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 15-06-1987 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument